# FASCICULE DE BREVET EUROPEEN

(11) **EP 1 999 841 B1**
(45) Date de publication et mention de la délivrance du brevet: **13.06.2012**
(21) Numéro de dépôt: 07727508.9
(22) Date de dépôt: 29.03.2007
(51) Int. Cl.: H02K 49/06

(54) **COUPLEUR MAGNETIQUE A HYSTERESIS, NOTAMMENT POUR DISPOSITIFS ENROULEURS-DEROULEURS**
MAGNETKOPPLUNG MIT HYSTERESE INSBESONDERE FÜR AUF-/ABWICKELEINRICHTUNGEN
MAGNETIC COUPLING WITH HYSTERESIS, PARTICULARLY FOR WINDING/UNWINDING DEVICES

(30) Priorité: 30.03.2006 FR 0602753
(43) Date de publication de la demande: 10.12.2008
(73) Titulaire: DELACHAUX S.A., 92230 Gennevilliers (FR)
(72) Inventeur: LACOUR, Gilles, F-01300 Belley (FR)
(74) Mandataire: Le Forestier, Eric
(86) Numéro de dépôt international: PCT/EP2007/053036
(87) Numéro de publication internationale: WO 2007/113210

(56) Documents cités:
- EP-A- 1 026 815
- FR-A- 1 602 519
- US-A- 6 129 193

## Description

L'invention concerne le domaine des accouplements magnétiques a hystérésis, notamment pour entraîner des dispositifs enrouleurs-dérouleurs avec un couple peu variable dans une large plage de vitesses.

Le document FR-1 602 519 décrit un dispositif enrouleur dérouleur utilisant de tels coupleurs. Chaque coupleur comporte deux éléments coaxiaux pouvant tourner l'un par rapport à l'autre, à savoir un inducteur développant un champ magnétique-multipolaire alterné dont les pôles se succèdent selon une symétrie de révolution autour de l'axe de révolution, et l'autre élément est en matière ferromagnétique, de préférence magnétiquement dure et non préalablement aimantée. Les pôles de l'inducteur sont formés par des électro-aimants ou de préférence par des aimants permanents. Au cours de l'enroulement ou du déroulement, on peut maintenir le moteur d'entraînement à la vitesse normale grâce aux possibilités de glissement des éléments récepteurs ou éléments menés par rapport aux éléments moteurs ou éléments menants. Selon ce document, le couple transmis varie alors peu.

L'expérience a toutefois montré qu'à des vitesses de glissement élevées, surtout au déroulement, le couple transmis augmentait d'une façon importante et gênante avec la vitesse de glissement, avec un accroissement pouvant dépasser par exemple 60% pour des vitesses de glissement supérieures à 2000 tours/min.

Il en est de même pour le coupleur décrit dans le document EP 1 026 815 qui comporte un élément inducteur et un élément induit susceptibles de tourner l'un par rapport à l'autre, l'élément inducteur possédant plusieurs pôles magnétiques et l'élément induit un ou plusieurs permanents induits à hystérésis.

On connaît également par le document FR-A-2 607 333 un coupleur magnétique du même type général, mais visant à donner un couple transmis dépendant beaucoup moins de la vitesse de glissement.

Selon ce document, le sous-ensemble induit du coupleur est en partie au moins constitué d'une pâte moulée contenant des particules d'aimants à hystérésis et un liant électriquement isolant tel qu'une résine époxyde, cette pâte état retenue sur une support en forme de disque possédant des aménagements de dissipation de la chaleur.

Il en résulte que les variations du couple, qui proviennent essentiellement des courants de Foucault induits par les variations des flux magnétiques dans le sous-ensemble induit, sont très fortement diminuées.

Toutefois, dans ce coupleur connu, on observe encore dans le sous-ensemble induit des échauffements importants qui proviennent du fait que l'énergie dissipée dans les cycles d'hystérésis est mal transmise aménagements de dissipation à cause de la mauvaise conductivité thermique du liant électriquement isolant, et qui imposent de dimensionner largement ce sous-ensemble induit pour éviter d'atteindre des températures excessives.

D'autre part, le document US 6 129 193 décrit un coupleur à hystérésis dont l'élément inducteur est constitué d'une série de pôles électromagnétiques séparés angulairement et dont l'élément induit est constitué par une série d'aimants permanents induits à hystérésis aussi séparés angulairement. Chacun de ces d'aimants permanents se présente sous la forme d'une portion de couronne en matériau magnétique à cycles d'hystérésis et est monté sur une couronne radialement externe en plastique dans laquelle est noyée une deuxième couronne en matériau magnétique assurant la liaison magnétique entre les différents aimants permanents. En outre la surface de chaque aimant permanent au regard de l'élément inducteur comporte une série de fentes radiales permettant de canaliser le flux magnétique, tout en atténuant les courants de Foucault sur cette surface seulement et renforçant le couple de synchronisation entre l'élément induit et l'élément inducteur. Sur les autres surfaces de l'aimant ainsi que sur la couronne magnétique les liant, les courants de Foucault restent présents sans aucune limitation. Cela ne permet pas, d'une part, un glissement continu entre induit et inducteur et, d'autre part, un couple transmis régulier par rapport au positionnement angulaire relatif de l'élément inducteur et de l'élément induit.

La présente invention vise. à atténuer les inconvénients de l'état de la technique et à proposer un nouveau coupleur qui tout en assurant une bonne régularité du couple, présente des performances améliorées en matière.d'échauffement.

Elle vise également à assurer de manière encore améliorée la régularité du couple transmis, et ce dans des gammes de variations de la vitesse encore élargies (étant précisé ici que ces variations étaient dans l'art antérieur limitées par la nécessité de limiter les échauffements en raison d'une dilatation thermique différentielle importante entre le liant de la pâte et le matériau métallique constituant le support d'induit).

A cet effet, on propose selon l'invention un coupleur magnétique à hystérésis selon la revendication 1 annexée.

Certains aspects préférés, mais non limitatifs, de ce coupleur sont les suivants :
* il est prévu un ensemble de fentes décalées les une par rapport aux autres dans la dimension radiale de la couronne, entre son bord extérieur et son bord intérieur.
* chaque fente présente une étendue angulaire sensiblement supérieure à celle d'un pôle du sous-ensemble inducteur.
* les fentes s'étendent selon des cercles concentrique avec le centre de la couronne,
* les cercles sont essentiellement équidistants les uns des autres.
* le ou chaque aimant induit est réalisé en alliage magnétique fer-chrome-cobalt.
* le ou chaque aimant induit présente un rapport entre largeur de couronne et épaisseur supérieur à environ 3.
* le ou chaque aimant induit est porté par un flasque en matériau métallique amagnétique à résistivité électrique élevée, en particulier supérieure à 5 µohm.cm, et à conductivité thermique élevée.
* le flasque est en acier inoxydable.
* il existe un contact surfacique intime entre le ou chaque aimant induit et le flasque associé.
* il est prévu entre le ou chaque aimant induit et le flasque associé une pâte thermiquement conductrice.
* le ou chaque flasque possède, à l'opposé de l'aimant induit, des ailettes de dissipation de chaleur.
* un nombre de fentes par niveau concentrique (F1-F4) et un nombre de pôles magnétiques du sous-ensemble inducteur ne sont pas multiples l'un de l'autre.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels

La figure 1 est une vue en coupe longitudinale axiale d'un coupleur magnétique à hystérésis selon la présente invention, et

La figure 2 est une vue en élévation de face d'un élément magnétique d'induit du coupleur de la figure 1.

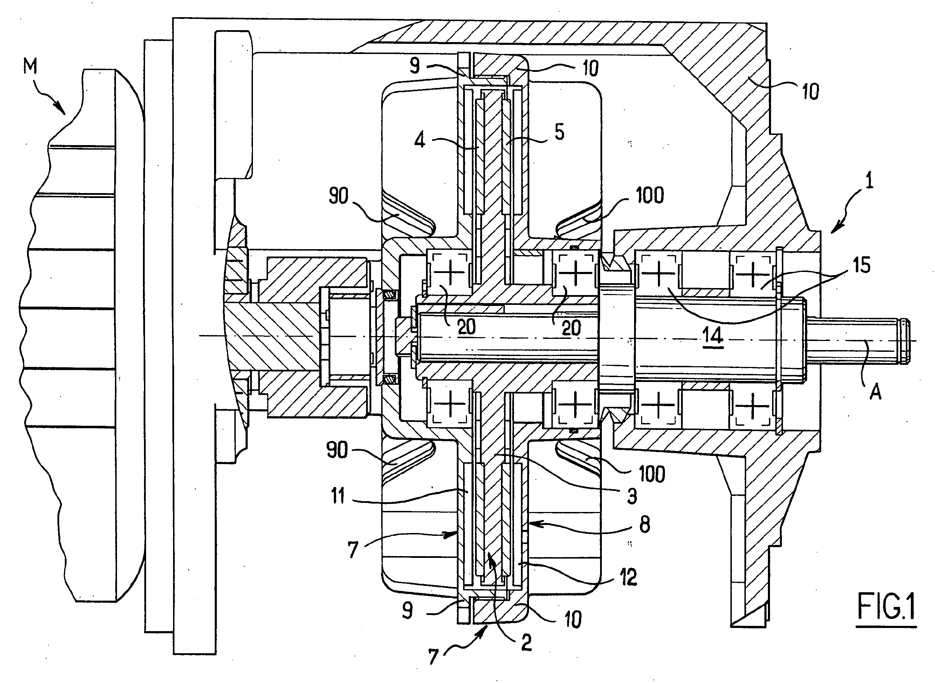

En référence à la figure 1, on a représenté un coupleur magnétique à hystérésis globalement désigné par la référence 1, qui comprend un sous-ensemble inducteur 2 en forme générale de disque et un sous ensemble induit 6 comportant deux parties d'induit assemblées 7 et 8 et situées de part et d'autre du sous-ensemble inducteur, le sous-ensemble inducteur et le sous-ensemble induit pouvant tourner l'un par rapport à l'autre selon un axe A par l'intermédiaire de roulements 20.

Le sous-ensemble inducteur 2 est constitué d'un plateau 3 en matériau ferromagnétique portant deux zones d'aimants permanents en forme de couronnes 4 et 5, et se prolongeant en un arbre de sortie 14 pouvant tourner entre les roulements 15. Les aimants permanents 4 et 5 définissent des pôles magnétiques alternés d'espacement angulaire régulier, et par exemple 24 pôles occupant chacun une largeur angulaire de 15°.

Les deux parties d'induit 7, 8 comportent respectivement deux induits 11 et 12 montés sur des supports ou flasques respectifs 9 et 10.

Chaque induit 11, 12 est formé par un aimant permanent à hystérésis massif. De préférence on choisit comme matériau d'aimant un alliage fer-chrome-cobalt, avec entre 26 et 30% en poids de chrome, de 7 à 10% en poids de cobalt, le complément étant du fer. Un tel alliage magnétique a pour propriété un cycle d'hystérésis vertical, et en particulier une induction rémanente comprise de préférence entre 8000 et 13000 Gauss pour un champ coercitif compris entre 50 et 800 0ersteds, et plus préférentiellement entre 9000 et 12000 Gauss pour un champ coercitif compris entre 50 et 300 Oersteds.

De tels aimants ont par ailleurs une résistivité électrique élevée, typiquement supérieure ou égale à environ 40 µOhm.cm et plus préférentiellement supérieure ou égale à environ 60 µOhm.cm.

Une autre propriété de ce type d'aimant est un coefficient de modification réversible d'induction inférieur à environ 0,5%, et plus préférentiellement inférieur à environ 0,05%.

Ce type d'aimant génère des couples importants peu sensibles à la température avec des champs magnétiques inducteurs relativement faibles. Ceci permet avantageusement de réduire le volume des aimants inducteurs et en particulier leur épaisseur.

Par ailleurs, les supports d'induits 9 et 10 sont réalisés en un matériau présentant une résistivité électrique élevée, typiquement supérieure à 5 µohm.cm, tel qu'un acier inoxydable de la série 304.

Ceci permet de limiter la recirculation de courants dans les induits 11, 12 et limiter ainsi les échauffements ainsi que la dépendance du couple avec la vitesse relative entre inducteurs et induits.

Les supports 9 et 10 sont pourvus sur leurs faces extérieures d'ailettes de refroidissement 90, 100 participant à l'évacuation de la chaleur engendrée dans les induits. Cette évacuation de chaleur s'effectue d'autant mieux qu'une bonne conduction thermique est assurée entre les aimants 11, 12 et les supports respectifs 9, 10. Ceci peut être réalisé soit par un contact surfacique intime entre ces pièces, avec une précision de formage appropriée, soit si nécessaire en ajoutant entre elles une pâte à conduction thermique élevée.

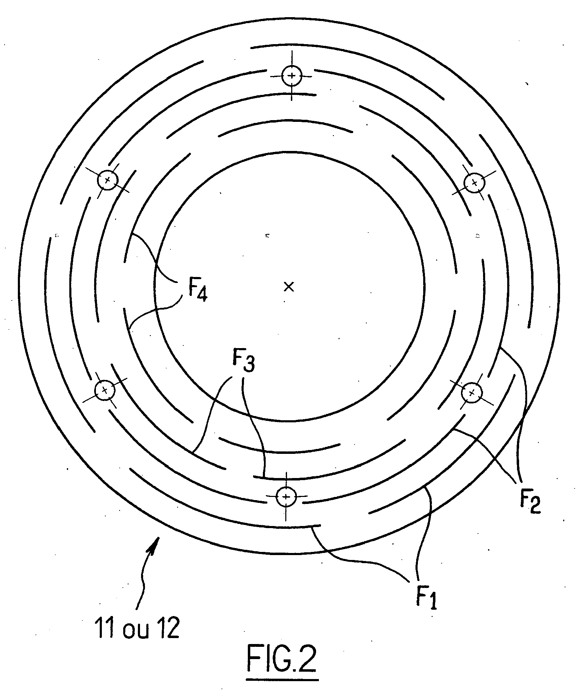

En outre, et comme le montre la figure 2, chaque aimant induit 11, 12 présente la forme d'une couronne massive dans laquelle sont pratiquées une série de fentes traversantes destinées à limiter la circulation de courants de Foucault radiaux dans ces aimants, et ainsi à limiter l'échauffement généré dans lesdits aimants.

Ces fentes, d'une largeur aussi faible que possible, sont avantageusement réalisées selon une technique de découpage par jet d'eau sous pression ou par Laser. Dans le présent exemple préférentiel, elles sont agencées sur des cercles concentriques régulièrement répartis entre l'extérieur de et l'intérieur de l'aimant en forme de couronne.

On prévoit ici quatre niveaux de fentes F1 à F4, les fentes les plus extérieures étant désignées par F1 et les fentes les plus intérieures étant désignées par F4. Les cercles sur lesquels sont situées ces fentes sont régulièrement espacés entre l'extérieur de la couronne et l'intérieur de la couronne. En outre, les fentes d'un niveau se chevauchent avec les fentes d'un niveau adjacent, étant précisé que l'étendue des fentes le long des cercles respectifs et de préférence cumulativement plus importante que l'étendue des interruptions qui séparent les fentes et qui assurent la cohésion mécanique de la pièce.

En outre, chaque fente s'étend de préférence, dans la direction circonférentielle, sur une pluralité de pôles adjacents.

On prévoit dans le présent exemple six fentes par niveau, s'étendant chacune sur une amplitude angulaire de l'ordre de 40 à 50° avec un décalage angulaire d'environ 15° des fentes situées à un certain niveau par rapport à celles situées à un niveau immédiatement adjacent, comme illustré.

Grâce au matériau à cycle d'hystérésis vertical utilisé pour les aimants induits 11, 12, qui permet de réduire la taille et en particulier l'épaisseur des aimants inducteurs, grâce au matériau électriquement peu conducteur utilisé pour les supports 9, 10, et enfin grâce à la formation de fentes de limitation des courants radiaux dans les induits; on peut réaliser des induits extrêmement minces, avec typiquement un rapport entre la largeur des couronnes en direction radiale et leur épaisseur selon l'axe supérieur à 3, sans donner lieu à des échauffements importants. Il en résulte que le coupleur peut être réalisé de façon plus économique, et avec un encombrement axial réduit.

L'entraînement du sous-ensemble induit 6 avec l'arbre de sortie d'un moteur électrique M représenté partiellement en partie gauche de la figure 1 se fait par l'intermédiaire d'un accouplement conventionnel qu'il n'est pas nécessaire de décrire en détail. Le sous-ensemble inducteur est quant à lui solidaire en rotation d'un arbre de sortie 14 monté dans une carcasse 10 du coupleur par l'intermédiaire de roulements 15.

Bien entendu, la présente invention n'est nullement limitée à la forme de réalisation décrite ci-dessus et représentée sur les dessins. L'homme du métier saura y apporter de nombreuses variantes et modifications.

En particulier, on pourra réaliser un coupleur avec
- une seule face active pour réduire le coût, notamment quand le couple à transmettre n'est pas trop élevé ;
- un nombre de fentes par niveau et un nombre de pôles magnétiques qui ne soient pas des multiples l'un de l'autre ;
- un nombre de vis de fixation de la couronne de l'induit sur son support (9,10) et un nombre de pôles magnétiques qui ne soient pas des multiples l'un de l'autre.

## Revendications

1. Coupleur magnétique à hystérésis (1) comportant un sous-ensemble inducteur (2) et un sous-ensemble induit (6) susceptibles de tourner l'un par rapport à l'autre, le sous-ensemble inducteur possédant une pluralité de pôles magnétiques et le sous-ensemble induit (6) possédant un ou plusieurs aimants permanents induits à hystérésis (11, 12), le ou chaque aimant induit étant réalisé sous forme d'une couronne d'un seul tenant en matériau magnétique à cycle d'hystérésis vertical **caracterisé en ce que** le ou chaque aimant d'induit comporte des fentes (F1-F4) traversantes d'atténuation des courants radiaux s'étendant chacune dans la direction de l'étendue circonférentielle de la couronne.

2. Coupleur magnétique selon la revendication 1, **caractérisé en ce qu'**il est prévu un ensemble de fentes décalées (F1-F4) les une par rapport aux autres dans la dimension radiale de la couronne, entre son bord extérieur et son bord intérieur.

3. Coupleur selon l'une des revendications 2, **caractérisé en ce que** chaque fente présente une étendue angulaire sensiblement supérieure à celle d'un pôle du sous-ensemble inducteur:

4. Coupleur selon l'une des revendications 1 à 3, **caractérisé en ce que** les fentes s'étendent selon des cercles concentriques avec le centre de la couronne.

5. Coupleur selon la revendication 4, **caractérisé en ce que** les cercles sont essentiellement équidistants les uns des autres.

6. Coupleur selon l'une des revendications 1 à 5, **caractérisé en ce que** le ou chaque aimant induit (11, 12) est réalisé en alliage magnétique fer-chrome-cobalt.

7. Coupleur selon l'une des revendications 1 à 6, **caractérisé en ce que** le ou chaque aimant induit présente un rapport entre largeur de couronne et épaisseur supérieur à environ 3.

8. Coupleur selon l'une des revendications 1 à 7, **caractérisé en ce que** le ou chaque aimant induit est porté par un flasque (9, 10) en matériau métallique amagnétique à résistivité électrique élevée, en particulier supérieure à 5 µohm.cm, et à conductivité thermique élevée.

9. Coupleur selon la revendication 8, **caractérisé en ce que** le flasque est en acier inoxydable.

10. Coupleur selon la revendication 8 ou 9, **caractérisé en ce qu'**il existe un contact surfacique intime entre le ou chaque aimant induit et le flasque associé.

11. Coupleur selon la revendication 8 ou 9, **caractérisé en ce qu'**il est prévu entre le ou chaque aimant induit et le flasque associé une pâte thermiquement conductrice.

12. Coupleur selon l'une des revendications 8 à 11, **caractérisé en ce que** le ou chaque flasque possède, à l'opposé de l'aimant induit, des ailettes (90, 100) de dissipation de chaleur.

13. Coupleur selon l'une des revendications 1 à 12, **caractérisé en ce qu'**un nombre de fentes par niveau concentrique (F1-F4) et un nombre de pôles magnétiques du sous-ensemble inducteur ne sont pas multiples l'un de l'autre.

## Claims

1. A magnetic coupler with hysteresis (1) comprising an inductor sub-assembly (2) and an armature sub-assembly (6) suitable for rotating relative to one another, the inductor sub-assembly having a plurality of magnetic poles and the armature sub-assembly (6) having one or more permanent armature magnets with hysteresis (11, 12), the or each armature magnet being made in the form of a crown in a single piece of a magnetic material with vertical hysteresis cycle **characterised in that** the or each armature magnet comprises through-slots (F1 - F4) for attenuating radial currents, each extending in the direction of the circumferential spread of the crown.

2. The magnetic coupler according to claim 1, **characterised in that** there is a set of offset slots (F1 - F4) one relative to the other in the radial dimension of the crown, between its outer edge and its inner edge.

3. The coupler according to any of claims 1 and 2, **characterised in that** each slot has an angular spread substantially greater than that of a pole of the inductor sub-assembly.

4. The coupler according to any of claims 1 to 3, **characterised in that** the slots extend according to circles concentric with the centre of the crown.

5. The coupler according to claim 4, **characterised in that** the circles are essentially equidistant from one another.

6. The coupler according to any of claims 1 to 5, **characterised in that** the or each armature magnet (11, 12) is made of magnetic iron-chromium-cobalt alloy.

7. The coupler according to any of claims 1 to 6, **characterised in that** the or each armature magnet has a ratio between crown width and thickness greater than approximately 3.

8. The coupler according to any of claims 1 to 7, **characterised in that** the or each armature magnet is borne by a flange (9, 10) made of non-magnetic metallic material with high electric resistivity, in particular greater than 5 µohm.cm, and with high thermal conductivity.

9. The coupler according to claim 8, **characterised in that** the flange is made of stainless steel.

10. The coupler according to claim 8 or 9, **characterised in that** there is close surface contact between the or each armature magnet and the associated flange.

11. The coupler according to claim 8 or 9, **characterised in that** a thermally conductive paste is provided between the or each armature magnet and the associated flange.

12. The coupler according to any of claims 8 to 11, **characterised in that** opposite the armature magnet the or each flange has heat dissipation fins (90, 100).

13. The coupler according to any of claims 1 to 12, **characterised in that** a number of slots per concentric level (F1-F4) and a number of magnetic poles of the inductor sub-assembly are not multiples of one another.

## Patentansprüche

1. Magnetische Kopplung (1) mit. Hysterese, aufweisend eine Unterbaugruppenspule (2) und einen Unterbaugruppenanker (6), die eingerichtet sind, sich relativ zueinander zu drehen, wobei die Unterbaugruppenspule eine Vielzahl von Magnetpolen umfasst und der Unterbaugruppenanker (6) ein oder mehrere Permanentankermagneten (11, 12) mit Hysterese umfasst, wobei der eine oder jeder Ankermagnet in Form von einer Krone aus einem Stück aus einem magnetischen Material mit vertikalem Hysteresezyklus umgesetzt ist, **dadurch gekennzeichnet, dass** der eine oder jeder Ankermagnet Durchgangsschlitze (F1-F4) zum Abschwächen von radialen Strömen aufweist und sich jeder Durchgangsschlitz in Umfangsrichtung der Krone erstreckt.

2. Magnetische Kopplung gemäß Anspruch 1, **dadurch gekennzeichnet, dass** eine Gruppe von in radialer Richtung der Krone zwischen ihrem Außenrand und ihrem Innenrand zueinander versetzten Schlitzen (F1-F4) vorgesehen ist.

3. Kopplung gemäß Anspruch 2, **dadurch gekennzeichnet, dass** jeder Schlitz einen Erstreckungswinkel bildet, der etwas größer als der eines Pols der Unterbaugruppenspule ist.

4. Kopplung gemäß einem der Ansprüche 1 bis 3, **dadurch gekennzeichnet, dass** die Schlitze sich entsprechend zentrischen Kreisen mit Kronenmittelpunkt erstrecken.

5. Kopplung gemäß Anspruch 4, **dadurch gekennzeichnet, dass** die Kreise im Wesentlichen voneinander in gleichem Abstand angeordnet sind.

6. Kopplung gemäß einem der Ansprüche 1 bis 5, **dadurch gekennzeichnet, dass** der eine oder jeder Ankermagnet (11, 12) aus einer magnetischen Eisen-Chrom-Kobalt-Legierung hergestellt ist.

7. Kopplung gemäß einem der Ansprüche 1 bis 6, **dadurch gekennzeichnet, dass** der eine oder jeder Ankermagnet ein Verhältnis zwischen der Breite der Krone und der Dicke von größer als ca. 3 bildet.

8. Kopplung gemäß einem der Ansprüche 1 bis 7, **dadurch gekennzeichnet, dass** der eine oder jeder Ankermagnet von einem Flansch (9, 10) aus nicht-magnetischem metallischem Material mit hohen elektrischem Widerstand, von insbesondere größer als 5 µohm·cm, und mit einer hohen thermischen Leitfähigkeit gehalten wird.

9. Kopplung gemäß Anspruch 8, **dadurch gekennzeichnet, dass** der Flansch aus rostfreiem Stahl ist.

10. Kopplung gemäß Anspruch 8 oder 9, **dadurch gekennzeichnet, dass** ein inniger Flächenkontakt zwischen dem einen oder jedem Ankermagnet und dem zugehörigen Flansch besteht.

11. Kopplung gemäß Anspruch 8 oder 9, **dadurch gekennzeichnet, dass** zwischen dem einen oder jedem Ankermagnet und dem zugehörigen Flansch eine thermisch leitfähige Paste vorgesehen ist.

12. Kopplung gemäß einem der Ansprüche 8 bis 11, **dadurch gekennzeichnet, dass** der eine oder jeder Flansch gegenüberliegend zu dem Ankermagneten Wärmeableitungsrippen (90, 100) umfasst.

13. Kopplung gemäß einem der Ansprüche 1 bis 12, **dadurch gekennzeichnet, dass** eine Anzahl von Schlitzen pro konzentrischem Niveau (F1-F4) und eine Anzahl von magnetischen Polen der Unterbaugruppenspule keine Vielfachen des jeweils anderen sind.
